# EUROPÄISCHE PATENTANMELDUNG

(11) **EP 1 650 065 A1**
(43) Veröffentlichungstag der Anmeldung: **26.04.2006**
(21) Anmeldenummer: 05020735.6
(22) Anmeldetag: 23.09.2005
(51) Int. Cl.: B60H 1/32, H05K 7/20

(54) **Kühleinrichtung für Fahrzeuge**

(30) Priorität: 23.10.2004 DE 102004051608
(71) Anmelder: Bayerische Motoren Werke Aktiengesellschaft, 80809 München (DE)
(72) Erfinder: Hofhaus, Jörn, Dr., 85354 Freising (DE); Meijering, Alexander, Dr., 80809 München (DE); Reitinger, Christian, 81549 München (DE)

(57) **Zusammenfassung**

Kühleinrichtung für Fahrzeuge, mit einem ersten Kühlkreislauf, der zur Kühlung eines Fahrgastraums des Fahrzeugs vorgesehen ist und der von einem ersten Kühlmittel durchströmt ist, und einer zu kühlenden Elektronik, die an einen zweiten Kühlkreislauf angeschlossen ist. Der zweite Kühlkreislauf wird von einem zweiten Kühlmittel durchströmt und ist thermisch mit dem ersten Kühlkreislauf gekoppelt. Der zweite Kühlkreislauf gibt somit Wärme, die er von der Elektronik aufgenommen hat, an den ersten Kühlkreislauf ab.

## Beschreibung

Die vorliegende Erfindung betrifft eine Kühleinrichtung für Fahrzeuge gemäß dem Oberbegriff des Patentanspruches 1.

Moderne Kraftfahrzeuge sind mit einer Vielzahl von "Elektronik-Komponenten" ausgestattet, wie z.B. Steuergeräten für Motor, Getriebe, Fahrwerk, CD-ROM- bzw. DVD-Laufwerken, Audio-Verstärkern, Head-up-Displays, etc. Aus Platzgründen ist man zunehmend gezwungen, Elektronikkomponenten in Nischen des Fahrzeugs anzuordnen, die entweder überhaupt nicht oder nur wenig belüftet sind. Elektronikkomponenten von Fahrzeugen müssen auch unter Extrembedingungen, insbesondere unter Heißlandbedingungen einwandfrei funktionieren. Problematisch mit Blick auf die thermische Empfindlichkeit von Elektronikkomponenten können jedoch nicht nur heiße Umgebungsbedingen sein, sondern auch die von Elektronikkomponenten selbst erzeugte Abwärme kann zu Ausfällen führen. Man ist daher zunehmend dazu gezwungen, Elektronikkomponenten aktiv zu kühlen.

Eine Möglichkeit besteht darin, Elektronikkomponenten mit kühler Luft aus der Fahrzeugklimaanlage zu kühlen. Ein wesentlicher Nachteil hierbei besteht jedoch darin, dass Luft im Vergleich zu anderen "Kühlmedien", wie z.B. Wasser, eine vergleichsweise geringe spezifische Wärmekapazität aufweist. Ein weiterer Nachteil einer derartigen "Luftkühlung" ist in den dabei auftretenden, relativ großen Wärmeübertragungsverlusten zu sehen.

Aufgabe der Erfindung ist es, eine Kühleinrichtung für Fahrzeuge zu schaffen, die eine effiziente Kühlung von Elektronikkomponenten ermöglicht und die gleichzeitig kompakt aufgebaut ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Kühleinrichtung mit zwei Kühlkreisläufen, nämlich einem ersten Kühlkreislauf, der zur Kühlung eines Fahrgastraums des Fahrzeugs vorgesehen ist und einem zweiten Kühlkreislauf, der zur Kühlung einer oder mehrerer Elektronikkomponenten vorgesehenen ist und der thermisch mit dem ersten Kühlkreislauf gekoppelt ist. Das Kühlmedium des zweiten Kühlkreislaufs nimmt Wärme von einer bzw. mehreren Elektronikkomponenten auf und überträgt die aufgenommene Wärme an das Kühlmedium des ersten Kühlkreislaufs. Die beiden Kühlkreisläufe können über einen Wärmeübertrager bzw. einen Wärmetauscher oder eine Heat-Pipe miteinander thermisch gekoppelt sein.

Bei dem ersten Kühlkreislauf kann es sich um den Kühlkreislauf einer herkömmlichen Heiz-/Klimaanlage mit einem Kompressor, Verdampfer und Kondensator handeln. Vorzugsweise ist der zweite Kühlkreislauf thermisch mit dem Verdampfer des ersten Kühlkreislaufs gekoppelt. Zur Übertragung von Wärme von dem zweiten auf den ersten Kühlkreislauf kann, ganz allgemein gesprochen, ein "Wärmeübertrager" bzw. ein Wärmetauscher vorgesehen sein, der an einer beliebigen Stelle des "Niederdruckabschnitts" des ersten Kühlkreislaufs mit dem ersten Kühlkreislauf thermisch gekoppelt ist.

Der Wärmeübertrager bzw. Wärmetauscher kann z.B. baulich in den Verdampfer des ersten Kühlkreislaufs integriert sein. Die Wärmeübertragung von dem zweiten auf den ersten Kühlkreislauf erfolgt primär durch Wärmeleitung. Das "Fluidsystem" des zweiten Kühlkreislaufs kann im Bereich des Verdampfers zwischen von erstem Kühlmittel durchströmten Kühlkanälen des Verdampfers angeordnet sein.

Bei dem ersten Kühlmittel kann es sich z.B. um Kohlendioxid (CO₂) handeln oder um Difluorethan (C₂H₄F₂), das auch unter der Bezeichnung R152 bekannt ist, oder um Tetrafluorethan (C₂H₂F₄), das auch unter der Bezeichnung R134a bekannt ist. Bei dem Kühlmedium des zweiten Kühlkreislaufs kann es sich beispielsweise um ein Gemisch aus Wasser und Frostschutzmittel, wie z.B. Glykol, handeln.

Ein wesentlicher Unterschied der Erfindung gegenüber dem Stand der Technik besteht darin, dass die von der Elektronik abgegebene Wärmeleistung nicht einfach an einen Kühlluftstrom abgegeben wird, sondern über einen separaten "Elektronik-Kühlkreis" und einen Wärmeübertrager bzw. Wärmetauscher an den Kühlkreislauf der Heiz-/Klimaanlage abgeführt wird. Der Kühlkreislauf der Heiz-/Klimaanlage bildet also eine Wärmesenke für die von der Elektronik abgegebene Wärme. Durch die oben beschriebene integrierte Anbindung des Wärmeübertragers bzw. Wärmetauscher an den Verdampfer des Klimageräts ist eine direkte Nutzung der Kälteleistung des Verdampfers möglich, was energetisch sehr effizient ist. Durch die direkte "Anbindung" des Wärmeübertragers bzw. Wärmetauschers an den Verdampfer wird die Funktionalität des Verdampfers erhöht, wobei jedoch die Funktionalität des Verdampfers zur Kühlung der Luft für den Fahrgastraum erhalten bleibt. Die Integration des Wärmeübertragers bzw. Wärmetauschers in den Verdampfer ermöglicht auch eine sehr kompakte Bauweise.

Hervorzuheben ist, dass die Kühlung der Elektronik, d.h. die Wärmeübertragung von dem zweiten auf den ersten Kühlkreislauf nicht notwendigerweise voraussetzt, dass dass das Heiz-/Klimagebläse im Fahrgastinnenraum eingeschaltet ist. Die Kühlung der Elektronik ist also auch bei ausgeschaltetem Heiz-/Klimagebläse sichergestellt.

Bei einer "Integration" des Wärmeübertragers bzw. Wärmetauschers in den Verdampfer kann als "Notfallstrategie", d.h. für den Fall, dass der erste Kühlkreislauf ausgefallen ist, vorgesehen sein, dass die Elektronik durch Kühlluft gekühlt wird.

Im Vergleich zu herkömmlichen "Elektronik-Kühleinrichtungen" ist die Kühleinrichtung gemäß der Erfindung auch für sehr heiße Umgebungsbedingungen geeignet, da der Verdampfer stets eine hinreichend große Temperaturdifferenz in Bezug auf das im zweiten Kühlkreislauf strömende Kühlmedium aufweist. Somit ist ein effizienter Wärmeübergang vom zweiten Kühlkreislauf auf den ersten Kühlkreislauf sichergestellt.

Im Folgenden wird die Erfindung im Zusammenhang mit der Zeichnung näher erläutert. Es zeigen:
- Figur 1: einen Verdampfer mit integriertem Wärmetauscher; und
- Figur 2: eine vergrößerte Darstellung eines Ausschnitts des Verdampfers der Figur 1 im Bereich des Wärmetauschers.

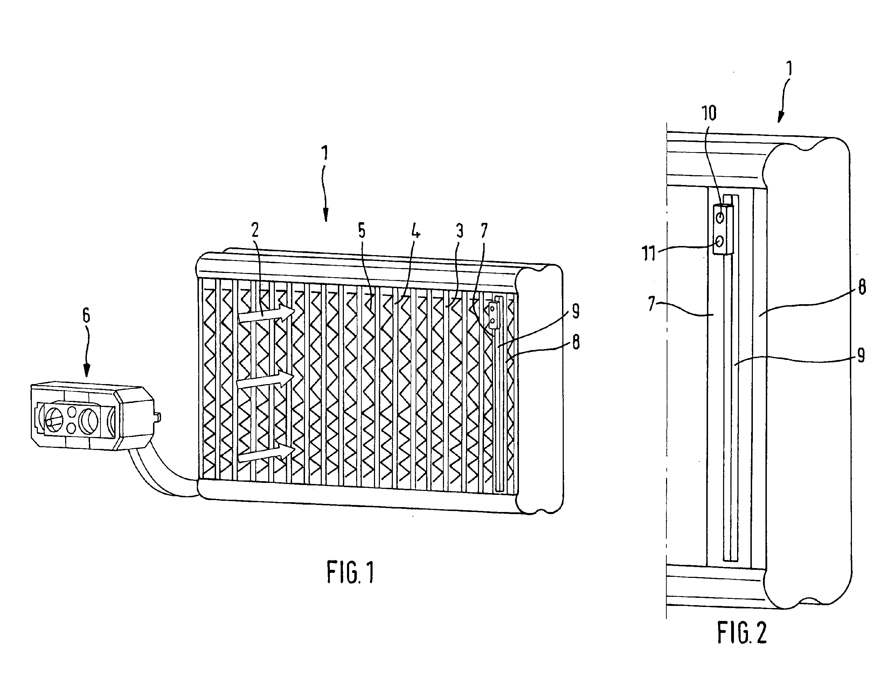

Figur 1 zeigt einen Verdampfer 1 einer Heiz-/Klimaanlage (nicht dargestellt) eines Fahrzeugs. Der Verdampfer 1 wird während der Fahrt von Fahrtluft durchströmt, was durch Pfeile 2 angedeutet ist. Der Verdampfer 1 dient primär zur Kühlung der in den Fahrgastraum (nicht dargestellt) zu leitenden Luft. Der Verdampfer 1 weist eine Vielzahl von Kühlkanälen 3, 4 auf, zwischen denen jeweils Kühllamellenbleche 5 angeordnet sind, die den Wärmeübergang von der den Verdampfer 1 durchströmenden Luft auf das in den Kühlkanälen 3, 4 strömende Kühlmedium der Heiz-/Klimaanlage verbessern. Das in den Kühlkanälen 3, 4 strömende Kühlmedium kann z.B. Kohlendioxid bzw. Tetrafluorethan (R134a) sein. Der Verdampfer 1 steht über eine "Fluidkupplung" 6 mit den übrigen Komponenten des Kühlkreislaufs der Heiz-/Klimaanlage in Fluidverbindung, d.h. mit dem Kompressor, dem Kondensator, dem Expansionsventil etc. Der Kühlkreislauf der Heiz-/Klimaanlage wird im Folgenden auch als "erster Kühlkreislauf" bezeichnet.

Wie aus den Figuren 1 und 2 ersichtlich ist, ist zwischen zwei Kühlkanälen 7, 8 des Verdampfers 1 ein "Wärmeübertrager" bzw. Wärmetauscher 9 angeordnet. Bei dem Wärmeübertrager 9 handelt es sich, ganz allgemein gesprochen, um ein "Fluidsystem", das einen Zulauf 10 und einen Ablauf 11 aufweist und das einen Abschnitt eines zweiten Kühlkreislaufs (nicht dargestellt) bildet. Der zweite Kühlkreislauf wird von einem zweiten Kühlmedium durchströmt, bei dem es sich beispielsweise um ein Gemisch aus Wasser und Frostschutzmittel handeln kann. Der zweite Kühlkreislauf ist zur Kühlung von hier nicht näher dargestellten Elektronikkomponenten vorgesehen. Die von den Elektronikkomponenten abgegebene Wärme wird von dem Kühlmedium des zweiten Kühlkreislaufs aufgenommen. Im Wärmeübertrager 9 wird die aufgenommene Wärme an den Verdampfer 1, oder genauer gesagt, über die Kühlkanäle 7, 8 des Verdampfers 1 an das den Verdampfer 1 durchströmende Kühlmedium abgegeben. Wie aus den Figuren 1 und 2 ersichtlich ist, erfolgt der Wärmeübergang von dem zweiten Kühlkreislauf auf den ersten Kühlkreislauf, d.h. auf den Kühlkreislauf des Verdampfers, primär durch Wärmeleitung.

Alternativ zu dem in den Figuren 1 und 2 gezeigten Ausführungsbeispiel, bei dem ein im wesentlichen herkömmlicher Wärmetauscher 9 zur Wärmeübertragung vom zweiten Kühlkreislauf auf den Verdampfer des ersten Kühlkreislaufs verwendet wird, kann auch eine Head-Pipe verwendet werden.

## Patentansprüche

1. Kühleinrichtung für Fahrzeuge, mit
einem ersten Kühlkreislauf, der zur Kühlung eines Fahrgastraums des Fahrzeugs vorgesehen ist und der von einem ersten Kühlmittel durchströmt ist und
einer zu kühlenden Elektronik,
**dadurch gekennzeichnet,**
**dass** die Elektronik an einen zweiten Kühlkreislauf angeschlossen ist, der von einem zweiten Kühlmittel durchströmt ist, das von der Elektronik abgegebene Wärme aufnimmt und dass der zweite Kühlkreislauf thermisch mit dem ersten Kühlkreislauf gekoppelt ist und Wärme an den ersten Kühlkreislauf abgibt.

2. Kühleinrichtung nach Anspruch 1, wobei der erste Kühlkreislauf einen Verdampfer (1) aufweist und der Verdampfer (1) thermisch mit dem zweiten Kühlkreislauf gekoppelt ist.

3. Kühleinrichtung nach Anspruch 2, wobei in den Verdampfer (1) ein von zweitem Kühlmittel durchströmter Wärmeübertrager (9) integriert ist, der Wärme von dem zweiten Kühlkreislauf auf Kühlkanäle des Verdampfers (1) überträgt.

4. Kühleinrichtung nach einem der Ansprüche 2 oder 3, wobei der Wärmeübertrager (9) zwischen zwei von erstem Kühlmittel durchströmten Kühlkanälen (7, 8) des Verdampfers (1) angeordnet ist.

5. Kühleinrichtung nach einem der Ansprüche 1 bis 4, wobei das erste Kühlmittel Difluourethan oder Tetrafluorethan ist.

6. Kühleinrichtung nach einem der Ansprüche 1 bis 4, wobei das erste Kühlmittel Kohlendioxid ist.

7. Kühleinrichtung nach einem der Ansprüche 1 bis 6, wobei das zweite Kühlmittel ein im wesentlichen inkompressibles Fluid ist.

8. Kühleinrichtung nach einem der Ansprüche 1 bis 7, wobei das zweite Kühlmittel ein Gemisch aus Wasser und einem Frostschutzmittel ist.
